(19) Europäisches Patentamt / European Patent Office / Office européen des brevets

(11) **EP 3 139 364 B1**

(12) **FASCICULE DE BREVET EUROPEEN**

(45) Date de publication et mention
de la délivrance du brevet:
**17.01.2018 Bulletin 2018/03**

(51) Int Cl.:
***G09C 1/00*** *(2006.01)*     ***H04L 9/00*** *(2006.01)*
***H04L 9/06*** *(2006.01)*

(21) Numéro de dépôt: **16155053.8**

(22) Date de dépôt: **10.02.2016**

(54) **PROTECTION DPA D'UN ALGORITHME DE RIJNDAEL**

DPA-SCHUTZ EINES RIJNDAEL-ALGORITHMUS

DPA PROTECTION OF A RIJNDAEL ALGORITHM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.09.2015 FR 1558116**

(43) Date de publication de la demande:
**08.03.2017 Bulletin 2017/10**

(73) Titulaire: **STMICROELECTRONICS (ROUSSET)
SAS**
**13790 Rousset (FR)**

(72) Inventeur: **BRUNEAU, Nicolas**
**69110 SAINTE-FOY-LES-LYON (FR)**

(74) Mandataire: **Thibon, Laurent**
**Cabinet Beaumont**
**1, rue Champollion**
**38000 Grenoble (FR)**

(56) Documents cités:
**WO-A1-2012/146550    US-A1- 2003 044 003**

- **Nicolas Bruneau ET AL: "Multi-variate
  High-Order Attacks of Shuffled Tables
  Recomputation", , 28 août 2015 (2015-08-28),
  XP055271179, ISBN: 978-3-662-48324-4 Extrait de
  l'Internet: URL:http://eprint.iacr.org/2015/837.pdf
  [extrait le 2016-05-09]**
- **ITOH K ET AL: "DPA countermeasure based on
  the masking method", SECURITY IN
  COMMUNICATION NETWORKS : THIRD
  INTERNATIONAL CONFERENCE ; REVISED
  PAPERS / SCN 2002, AMALFI, ITALY,
  SEPTEMBER 11 - 13, 2002; [LECTURE NOTES IN
  COMPUTER SCIENCE , ISSN 0302-9743],
  SPRINGER VERLAG, DE, vol. 2288, 1 décembre
  2001 (2001-12-01), pages 440-456, XP002322028,
  ISBN: 978-3-540-24128-7**
- **CHRISTOPH HERBST ET AL: "An AES Smart
  Card Implementation Resistant to Power
  Analysis Attacks", 1 janvier 2006 (2006-01-01),
  APPLIED CRYPTOGRAPHY AND NETWORK
  SECURITY LECTURE NOTES IN COMPUTER
  SCIENCE;;LNCS, SPRINGER, BERLIN, DE,
  PAGE(S) 239 - 252, XP019034418, ISBN:
  978-3-540-34703-3 * sections 2.1, 2.2 and 3.2 ***

EP 3 139 364 B1

**Description**

<u>Domaine</u>

La présente description concerne de façon générale les circuits électroniques et, plus particulièrement, les circuits exécutant des algorithmes de chiffrement connus sous la dénomination Rijndael qui mettent en oeuvre une même transformation sur différentes parties de données à chiffrer. La présente description concerne plus particulièrement la protection d'un calcul exécuté par un tel algorithme contre des attaques par analyse différentielle de la consommation (DPA).

<u>Exposé de l'art antérieur</u>

Dans de nombreuses applications, des circuits électroniques mettent en oeuvre des algorithmes de chiffrement, de vérification, de signature, et plus généralement des algorithmes manipulant des données, dites secrètes, c'est-à-dire dont on souhaite réserver l'accès à certains utilisateurs ou circuits. Parmi les algorithmes de Rijndael, l'algorithme AES, souvent dénommé l'AES (Advanced Encryption Standard, FIPS PUB 197), traite des blocs de données de taille fixée à 128 bits et est un algorithme de chiffrement particulièrement répandu. La présente description prend cet algorithme pour exemple.
L' AES applique, à un mot ou message découpé en blocs, une même transformation plusieurs fois de suite à partir de sous-clés différentes issues d'une même clé.
De nombreuses méthodes, dites attaques, existent pour tenter de découvrir ou pirater les données secrètes. Parmi ces attaques, des attaques dites par canaux cachés (Side Channel Attacks) consistent à analyser l'influence du calcul exécuté par le circuit électronique sur des paramètres tels que sa consommation, son rayonnement électromagnétique, etc. Une attaque par canaux cachés, particulièrement répandue et qui sera prise pour exemple dans la suite de la présente description, est l'attaque connue sous la dénomination DPA (Differential Power Analysis). Une telle attaque consiste à corréler la consommation du circuit intégré exécutant l'algorithme avec des résultats de calcul faisant intervenir les clés secrètes utilisées lors du chiffrement ou du déchiffrement. En pratique, à partir d'un message à chiffrer et d'hypothèses sur la clé secrète, on établit une courbe de corrélation statistique en fonction du temps entre la consommation du circuit pour le chiffrement du message et une valeur intermédiaire calculée par le circuit. De telles attaques par analyse de la consommation sont largement décrites dans la littérature (voir par exemple l'article "Differential Power Analysis" de Paul Kocher, Joshua Jaffe et Benjamin Jun, paru en 1999, conférence CRYPTO 99, pages 388 à 397, publié par Springer-Verlag LNCS 1666).
Il existe un besoin d'améliorer la protection des données manipulées par des algorithmes de type Rijndael et plus particulièrement par un AES contre des attaques par canaux cachés.
Il existe également un besoin de vérifier la sensibilité d'un circuit électronique à des attaques par canaux cachés.

<u>Résumé</u>

Un mode de réalisation pallie tout ou partie des inconvénients des procédés et circuits usuels de protection contre des attaques par canaux cachés.
Un mode de réalisation propose une solution particulièrement adaptée à un algorithme de type AES.
Un mode de réalisation propose un procédé de calcul d'un algorithme AES qui pallie tout ou partie des inconvénients des procédés usuels.
Un mode de réalisation propose un procédé de vérification de la sensibilité d'un circuit électronique exécutant un algorithme AES à une attaque par canaux cachés.
Ainsi, un mode de réalisation prévoit...
Procédé de protection, d'un algorithme de type Rijndael exécuté par un circuit électronique, contre des attaques par canaux cachés, dans lequel :

chaque bloc de données à chiffrer ou à déchiffrer est masqué par un premier masque avant application d'une opération non linéaire de substitution par bloc à partir d'une table de substitution, puis est démasqué par un deuxième masque après substitution ; et
la table de substitution est recalculée, bloc par bloc, avant application de l'opération non linéaire, l'ordre de traitement des blocs de la table de substitution étant soumis à une permutation aléatoire, commutative avec l'opération non linéaire de substitution.

Selon un mode de réalisation :

successivement, pour chaque bloc de la table de substitution :

> dans une première étape, le rang du bloc est soumis à ladite permutation et est combiné au premier masque ;
> dans une deuxième étape, le bloc est soumis à la permutation et le résultat est combiné au deuxième masque ; et
> le bloc, identifié par le résultat de la première étape, est substitué par le résultat de la deuxième étape.

Selon un mode de réalisation, le procédé comporte les étapes suivante :

successivement pour chaque bloc de la table de substitution :

> dans une première étape, appliquer la permutation au rang du bloc courant, combiner le résultat au premier masque et stocker le résultat dans une première variable ;
> dans une deuxième étape, appliquer la permutation au bloc courant, combiner le résultat au deuxième masque et stocker le résultat dans une deuxième variable ; et
> remplacer le bloc de la table de substitution ayant pour rang le résultat de la première étape par le résultat de la deuxième étape.

Selon un mode de réalisation, les masques sont des nombres aléatoires.

Selon un mode de réalisation, les masques ont tous la même taille qu'un bloc.

Selon un mode de réalisation, les combinaisons sont de type OU-Exclusif.

Selon un mode de réalisation, le procédé est appliqué à l'AES.

Un mode de réalisation prévoit un circuit électronique adapté à, configuré pour, ou programmé pour la mise en oeuvre du procédé.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

> la figure 1 illustre, par un organigramme simplifié, les étapes principales d'un algorithme de type AES ;
> la figure 2 représente, de façon schématique et sous forme de blocs, un exemple de masquage d'une table de substitution d'un chiffrement par blocs ;
> la figure 3 représente, de façon schématique et sous forme de blocs, un exemple de masquage d'une table de substitution recalculée avec un ordre aléatoire ;
> la figure 4 représente, de façon schématique et sous forme de blocs, un mode de réalisation d'un procédé de protection de l'exécution d'un algorithme AES ;
> la figure 5 représente, de façon schématique et sous forme de blocs, un autre mode de réalisation d'un procédé de protection de l'exécution d'un algorithme AES ;
> la figure 6 représente, de façon schématique et sous forme de blocs, encore un autre mode de réalisation d'un procédé de protection de l'exécution d'un algorithme AES ; et
> la figure 7 représente un exemple de circuit électronique adapté à la mise en oeuvre des procédés décrits.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les applications des chiffrements/déchiffrements exécutés ou celles des circuits électroniques les exécutant n'ont pas été détaillées, les modes de réalisation décrits étant compatibles avec les applications usuelles.

Les modes de réalisation seront décrits par la suite en relation avec un exemple d'application à l'AES. Toutefois, tout ce qui est décrit par la suite s'applique plus généralement à tout algorithme par blocs faisant intervenir une opération non linéaire de substitution, comme les algorithmes de type Rijndael.

L'AES est généralement exécuté par des circuits intégrés, soit au moyen de machines d'états en logique câblée, soit au moyen de microprocesseurs exécutant un programme en mémoire (généralement une mémoire morte). L'algorithme utilise des clés secrètes propres au circuit intégré ou à l'utilisateur, qui sont exploitées pour chiffrer les données. Plus précisément, l'AES applique, à un mot ou code de données découpé en blocs, une même transformation plusieurs fois de suite à partir de sous-clés de chiffrement différentes (de parties d'un mot binaire constituant une clé).

L'AES est souvent utilisé dans des dispositifs électroniques de type carte à microcircuit, décodeur, téléphone mobile, etc.

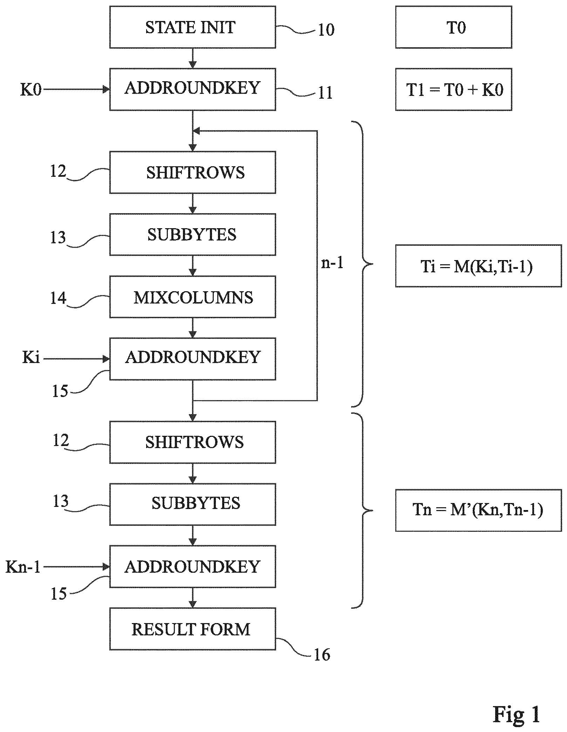

La figure 1 illustre, par un organigramme simplifié, les étapes principales d'un algorithme de type AES. On se contentera de décrire le chiffrement, le déchiffrement reprenant les transformations inverses. Pour plus de détails, on pourra se référer à l'ouvrage "The Design of Rijndael" de Joan Daemen et Vincent Rijmen, paru aux éditions Springer-Verlag (ISBN 3-540-42580-2) et à la norme AES (FIPS PUB 197).

Cet algorithme chiffre un mot ou code T0 d'un nombre de bits déterminé en un autre mot ou code Tn de même taille. Les données (message) à traiter sont en fait découpées en plusieurs mots ou codes ayant tous la même taille (128 bits pour l'AES). Le chiffrement et le déchiffrement reposent sur une clé secrète dont la longueur (128, 192 ou 256 bits pour l'AES) conditionne la sécurité du chiffrement.

En pratique, chaque étape de l'AES traite une matrice de quatre lignes et quatre colonnes, représentant un mot, et dont chaque élément est un octet ou bloc du code de 128 bits traité. Pour simplifier la description qui suit, on fera référence, pour chaque étape, à un état considéré comme étant une matrice. On prend, pour exemple, un algorithme AES appliqué à des mots de 32 bits découpés en octets, ce qui correspond au cas le plus fréquent.

On commence par produire, à partir de la clé secrète sur 128, 192 ou 256 bits, respectivement 11, 13 ou 15 sous-clés comprenant chacune également 128 bits. Ces sous-clés sont destinées à être utilisées par l'algorithme décrit en relation avec la figure 1.

On part d'un état initial T0 (bloc 10, STATE INIT) du code ou mot de données à chiffrer.

Une première phase de l'AES est une opération (bloc 11, ADDROUNDKEY) qui consiste à effectuer une combinaison de type Ou-Exclusif (XOR), noté + aux figures, de l'état initial T0 avec la première sous-clé K0. On obtient un premier état intermédiaire T1. En pratique, les opérations sont effectuées octet par octet.

Une deuxième phase consiste à effectuer plusieurs tours ou cycles d'une même transformation M faisant intervenir, à chaque tour i, l'état Ti-1 obtenu au tour précédent et une sous-clé courante Ki. Le nombre de tours de transformation M correspond à n-1, c'est-à-dire au nombre n+1 de sous-clés dérivées, diminué de 2. Chaque transformation de tour M est constituée de quatre opérations appliquées successivement.

Une première opération (bloc 12, SHIFTROWS) consiste à opérer une rotation sur les trois dernières lignes de la matrice. Typiquement, la première ligne de la matrice demeure inchangée. La deuxième ligne subit une rotation d'un octet, la troisième ligne subit une rotation de deux octets et la quatrième ligne subit une rotation de trois octets.

Une deuxième opération (bloc 13, SUBBYTES) de la transformation de tour M constitue une transformation non linéaire dans laquelle chaque octet de la matrice constituant l'état courant est remplacé par son image, prise dans une table de substitution, généralement dénommée SBOX. Cette table de substitution peut être obtenue par deux transformations combinées. Une première transformation consiste à inverser l'octet considéré (l'élément de la matrice) dans le corps fini d'ordre $2^8$ (pour correspondre à l'octet), l'octet 00 constituant sa propre image. Cette inversion est suivie d'une transformation affine.

Une troisième opération (bloc 14, MIXCOLUMNS) de la transformation de tour M consiste à considérer chaque colonne de la matrice issue de l'étape précédente comme un polynôme sur le corps fini d'ordre $2^8$, et à multiplier chacun de ces polynômes par un polynôme de combinaison modulo un autre polynôme.

Une quatrième et dernière opération (bloc 15, ADDROUNDKEY) de la transformation de tour M de rang i consiste à appliquer la sous-clé Ki à la matrice résultante de l'état précédent pour obtenir une matrice dans laquelle chaque octet de la matrice résultante de l'état précédent a été combiné par un Ou-Exclusif, bit à bit, avec un octet k, ou Ki(j, 1), de la sous clé Ki, j représentant le rang compris entre 0 et 3 de la ligne dans la matrice et 1 représentant le rang compris entre 0 et 3 de la colonne dans la matrice. Cette opération 15 est la même que l'opération 11 de la première phase du chiffrement, mais effectuée avec une sous-clé différente.

A l'issue de l'opération 15, on obtient pour un tour de rang i, un état Ti=M(Ki, Ti-1). Les quatre opérations de la transformation de tour sont répétées n-1 fois, c'est-à-dire qu'après l'opération 15, on revient à l'opération 12 pour ré-effectuer un tour avec une sous-clé suivante.

La troisième phase de l'AES consiste en un dernier tour comprenant les opérations 12, 13 et 15 de la transformation de tour M à l'exception de la troisième (MIXCOLUMNS) avec, comme clé pour l'opération 15, la dernière sous-clé Kn-1.

On obtient alors l'état Tn = M'(Kn, Tn-1). Ce résultat est le cas échéant mis en forme (bloc 16, RESULT FORM) pour utilisation ultérieure.

L'ordre des opérations 12, 13, 14, et 15 dans la transformation de tour T peut varier. En particulier, l'introduction de la sous-clé (étape 15) peut intervenir avant l'opération de substitution 13.

On a déjà proposé différentes contremesures pour réduire la sensibilité des traitements algorithmiques de type AES à des attaques par canaux cachés et notamment à des attaques par analyse de la consommation en courant du circuit exécutant l'algorithme.

Généralement, ces contremesures masquent les calculs en introduisant des nombres aléatoires à certaines étapes considérées sensibles. En particulier, la table de substitution est considérée comme une étape sensible aux attaques en raison du caractère non-linéaire de l'opération qu'elle réalise. Un table de substitution représente généralement une matrice de 256 octets qu'il est nécessaire de précalculer, puis de lire dans une mémoire de stockage 16 fois à chaque tour de l'algorithme AES. Dans certains cas, on mémorise une table avec les résultats de la table de substitution (également dénommée SBOX) et de la transformation de colonne MIXCOLUMNS, la table mémorisée et les résultats des deux transformations étant appliqués à un octet de chaque état.

Pour masquer une table de substitution, on recalcule une table de substitution masquée qui intervient dans la transformation de tour. Masquer une table de substitution impose de tenir compte, pour son calcul, du masque qui servira au démasquage du résultat chiffré.

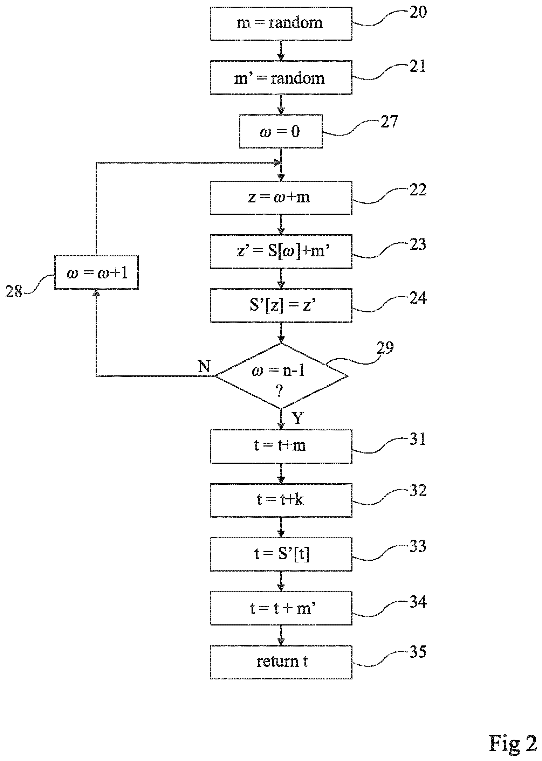

La figure 2 représente, de façon schématique et sous forme de blocs, un exemple de masquage d'une table de substitution d'un chiffrement par blocs.

Dans l'exemple de la figure 2, on suppose que la substitution (étape 13, figure 1) est effectuée après l'étape 15 dans laquelle intervient la clé de tour. Par ailleurs, on considère que l'étape 14 (MIXCOLUMNS) est intégrée à l'opération de substitution, c'est-à-dire que la table de substitution réalise les deux opérations 13 et 14. Pour simplifier, on ne tient pas compte de l'opération 12 (SHIFTROWS).

On commence (bloc 20, m=random), (bloc 21, m'=random), par définir deux masques (nombres aléatoires) $m$ et $m'$, respectivement de masquage et de démasquage. Les nombres $m$ et $m'$ représentent des octets.

Puis, successivement pour chaque octet $S[\omega]$ de rang $\omega$ de la table de substitution S, on combine (bloc 22, $z=\omega+m$) par un OU-Exclusif (que l'on note par une opération + d'addition bit à bit) le rang $\omega$ de l'octet au masque $m$ en plaçant le résultat dans une variable temporaire $z$. On combine ensuite (bloc 23, $z'=S[\omega]+m'$) l'octet $S[\omega]$ au masque $m'$ en plaçant le résultat dans une variable temporaire $z'$. Puis (bloc 24, S'[z]=z'), on affecte la valeur contenue dans cette variable $z'$ à l'octet $S'[z]$ de rang $z$ de la table de substitution masquée S'.

Par exemple, un compteur $\omega$ est initialisé à 0 (bloc 27, $\omega=0$) et est incrémenté de 1 (bloc 28, $\omega=\omega+1$) à chaque traitement d'un octet de la table S tant que tous les octets n'ont pas été traités (sortie N du bloc 29, $\omega=n-1$ ?).

Une fois que les n octets $S[\omega]$ de la table de substitution S ont été traités (sortie Y du bloc 29), on utilise la table de substitution masquée S' pour traiter le message octet par octet (bloc par bloc).

Ainsi, chaque octet $t$ du message est combiné (bloc 31, t=t+m) par un OU-Exclusif au masque $m$ en plaçant le résultat dans la variable $t$ (en écrasant l'octet $t$), puis est combiné (bloc 32, t=t+k) par un OU-Exclusif à un octet $k$ de la sous-clé en écrasant l'octet $t$ dans la variable $t$, puis est substitué (bloc 33, S'[t]) par son image $S'[t]$ dans la table de substitution masquée S'. La variable $t$ contenant cette image $S'[t]$ est alors démasquée (bloc 34, t=t+m') en la combinant par un OU-Exclusif au masque $m'$. On retourne alors le contenu de la variable $t$.

Les étapes 31 à 35 sont reproduites pour tous les octets $t$ du message.

Le calcul illustré par la figure 2 peut également s'écrire de la façon suivante :

```
m <- aléa (bloc 20)

m' <- aléa (bloc 21)
```

Pour $\omega=0$ à n-1 (bloc 27, sortie N du bloc 29, bloc 28) :

```
z <- ω+m (bloc 22)

z' <- S[ω]+m' (bloc 23)

S'[z]=z' (bloc 24)
```

Fin de boucle (sortie Y du bloc 29)

```
t <- t+m (bloc 31)

t <- t+k (bloc 32)
```

```
t <- S'[t] (bloc 33)
```

```
t <- t+m' (bloc 34)
```

Retourner t (bloc 35).

Des attaques DPA, dites de deuxième ordre ou d'ordre supérieur, ont rendu les algorithmes AES encore plus vulnérables, y compris lorsqu'ils utilisent un masque aléatoire. Les attaques DPA de deuxième ordre consistent à isoler, dans une même trace en courant, la signature du masque et celle de la donnée (dans l'exemple de l'AES, la table) masquée. En combinant les signatures et, dans le cas de l'AES en rejouant l'attaque plusieurs fois, on parvient à découvrir directement ou indirectement le masque (le nombre aléatoire).

Pour améliorer la protection d'une table de substitution contre ce type d'attaques, on a récemment proposé de mélanger l'ordre dans lequel la table de substitution S est recalculée pour obtenir la table masquée S'.

Par exemple, on fait intervenir une permutation aléatoire que l'on utilise pour définir l'ordre dans lequel les octets $S[\omega]$ de la table de substitution sont masqués par les nombres m et m'.

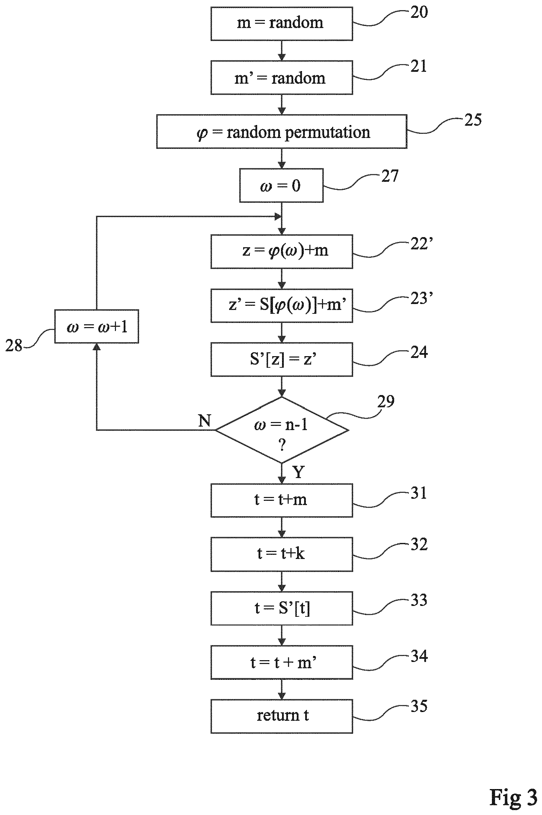

La figure 3 représente, de façon schématique et sous forme de blocs, un exemple de masquage d'une table de substitution recalculée avec un ordre aléatoire.

Par rapport à la solution décrite en relation avec la figure 2, cela revient à sélectionner (bloc 25, $\varphi$=random permutation) une permutation aléatoire $\varphi$ applicable dans l'ensemble des n rangs $\omega$, et à remplacer, dans les étapes 22 et 23, la prise en compte du rang $\omega$ des octets de la table de substitution par la prise en compte du résultat $\varphi(\omega)$ de l'application de la fonction de permutation $\varphi$ au rang $\omega$ (bloc 22', z=$\varphi(\omega)$+m et bloc 23', z'=S[$\varphi(\omega)$]+m'). Cela revient à modifier l'ordre dans lequel les octets de la table de substitution sont recalculés, donc masqués. Les autres étapes décrites en relation avec la figure 2 ne sont pas modifiées.

Le calcul illustré par la figure 3 peut également s'écrire de la façon suivante :

```
m <- aléa (bloc 20)
```

```
m' <- aléa (bloc 21)
```

```
φ <- permutation aléatoire (bloc 25)
```

Pour $\omega$=0 à n-1 (bloc 27, sortie N du bloc 29, bloc 28) :

```
z <- φ(ω)+m (bloc 22')
```

```
z' <- S[φ(ω)]+m' (bloc 23')
```

```
S'[z]=z' (bloc 24)
```

Fin de boucle (sortie Y du bloc 29)

```
t <- t+m (bloc 31)
```

```
t <- t+k (bloc 32)
```

```
t <- S'[t] (bloc 33)
```

```
t <- t+m' (bloc 34)
```

Retourner t (bloc 35).

L'inventeur s'est cependant aperçu d'une faiblesse rendant cette contremesure vulnérable à une attaque DPA d'un ordre encore supérieur.

Cette faiblesse provient du masquage de la table de substitution lui-même. En effet, le fait que la permutation aléatoire φ soit inconnue apporte l'avantage que la valeur du rang ω dans la boucle (blocs 22', 23', 24) reste inconnue d'un éventuel attaquant. Cependant, par deux fois dans chaque boucle, (étapes 22' et 23'), on manipule le rang ω. Par conséquent, il est possible pour un attaquant d'exploiter la "fuite" de sécurité liée aux deux manipulations à chaque boucle du rang courant ω. En particulier, la conséquence de l'étape 23' est que la fonctions φ est présente sur toute la table de substitution, soit en pratique 256 fois, ce qui représente autant de fuites. En combinant les résultats des étapes 22' et 23', on élimine la contribution de la fonction φ. Une attaque sur l'étape 32, bien que plus compliquée qu'en figure 2, redevient efficace.

En fait, la réalisation de la figure 3 résout le problème des attaques de deuxième ordre sur la valeur du masque m. Toutefois, une attaque du troisième ordre permet de percer le secret à partir du moment où l'attaquant est en mesure d'identifier, dans la trace en courant, les étapes 22' et 23', donc les points de fuite.

Selon un premier aspect, on souhaite évaluer la résistance d'un circuit électronique à une attaque telle que décrite ci-dessus. Pour cela, l'attaque est exécutée et on détecte si elle est ou non efficace.

Selon des deuxième et troisième aspects, on souhaite améliorer la résistance d'un algorithme de chiffrement par blocs de type Rijndael contre des attaques par canaux cachés.

On prévoit alors de faire en sorte que l'opération de l'étape 22' (figure 3) n'apparaisse pas dans le recalcul de la table.

Selon le deuxième aspect, on prévoit de diviser le nombre aléatoire m en deux et de réaliser le masquage de la table de substitution en deux étapes.

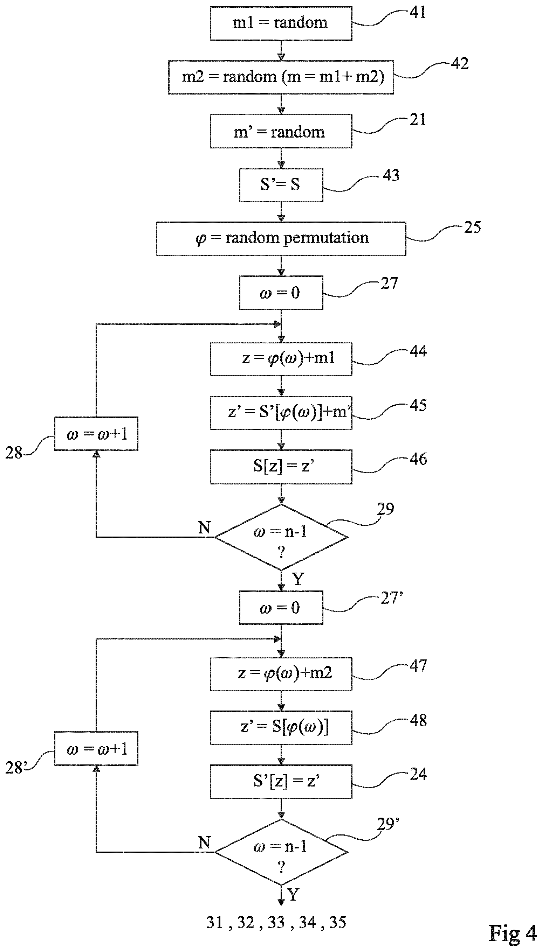

La figure 4 représente, de façon schématique et sous forme de blocs, un mode de réalisation selon ce deuxième aspect.

On commence (bloc 41, m1=random), (bloc 42, m2=random, m=m1+m2), par définir deux masques (nombres aléatoires) m1 et m2 tels que leur combinaison par un OU-Exclusif représente un nombre aléatoire m (le nombre qui sera utilisé à l'étape 31). On définit ensuite, comme précédemment, la valeur aléatoire m' de démasquage (bloc 21, m'=random) et une permutation aléatoire (bloc 25, φ=random permutation) applicable dans l'ensemble des n rangs ω. Les masques m1, m2, m et m' représentent des octets. On initialise également (bloc 43, S'=S) une table de substitution masquée S' avec les valeurs de la table de substitution non masquée S. L'ordre des étapes 21 et 43 (ou 43 et 21) par rapport aux étapes 41 et 42 n'a pas d'importance.

Puis, on découpe le recalcul de la table de substitution en deux boucles, une première fois avec l'intervention de l'aléa m1 sur la table S', une seconde fois avec l'intervention de l'aléa m2 sur la table S issue de la première boucle.

Ainsi, successivement pour chaque octet S'[ω] de rang ω de la table de substitution S', on applique la fonction de permutation φ au rang ω et on combine (bloc 44, z=φ(ω)+m1) par un OU-Exclusif le résultat φ(ω) au masque m1 en plaçant le résultat dans une variable temporaire z. On combine ensuite (bloc 45, z'=S'[φ(ω)]+m') l'octet S'[φ(ω)] au masque m' en plaçant le résultat dans une variable temporaire z'. Puis (bloc 46, S[z]=z'), on affecte la valeur contenue dans cette variable z' à l'octet S[z] de rang z de la table de substitution non masquée S.

Par exemple, un compteur ω est initialisé à 0 (bloc 27, ω=0) et est incrémenté de 1 (bloc 28, ω=ω+1) à chaque traitement d'un octet de la table S' tant que tous les octets n'ont pas été traités (sortie N du bloc 29, ω=n-1 ?).

Une fois que les n octets S'[ω] de la table de substitution S' initialisée en 43 ont été traités (sortie Y du bloc 29) avec la partie m1 du nombre m, on reprend les octets de la table de substitution S résultante de la première boucle pour les masquer avec la partie m2.

Ainsi, successivement pour chaque octet S[ω] de rang ω de la table de substitution S, on applique la fonction de permutation φ au rang ω et on combine (bloc 47, z=φ(ω)+m2) par un OU-Exclusif le résultat φ(ω) au masque m2 en plaçant le résultat dans la variable z. On place ensuite (bloc 48, z'=S[φ(ω)]), l'octet S[φ(ω)] de la table de substitution S résultant de la première boucle, dans la variable z'. Puis (bloc 24, S'[z]=z'), on affecte la valeur contenue dans cette variable z' à l'octet S'[z] de rang z de la table de substitution masquée S'.

Par exemple, pour le calcul en boucle, un compteur ω est de nouveau initialisé à 0 (bloc 27', ω=0) et est incrémenté de 1 (bloc 28', ω=ω+1) à chaque traitement d'un octet de la table S issue de la première boucle, tant que tous les octets n'ont pas été traités (sortie N du bloc 29', ω=n-1 ?).

Une fois (sortie Y du bloc 29') que les n octets S[φ(ω)] de la table de substitution S issue de la première boucle ont été traités avec la partie m2 du nombre m, on utilise la table de substitution masquée résultante S' pour traiter le message octet par octet (bloc par bloc) et exécuter les étapes 31 à 35 comme décrit dans les figures 2 et 3.

Le calcul illustré par la figure 4 peut également s'écrire de la façon suivante :

```
m1 <- aléa (bloc 41)

m2 <- aléa (bloc 42)

m' <- aléa (bloc 21)

S' <- S (bloc 43)

φ <- permutation aléatoire (bloc 25)
```

Pour $\omega$=0 à n-1 (bloc 27, sortie N du bloc 29, bloc 28) :

```
z <- φ(ω)+m1 (bloc 44)

z' <- S'[φ(ω)]+m' (bloc 45)

S[z]=z' (bloc 46)
```

Fin de boucle (sortie Y du bloc 29)
Pour $\omega$=0 à n-1 (bloc 27', sortie N du bloc 29', bloc 28') :

```
z <- φ(ω)+m2 (bloc 47)

z' <- S[φ(ω)] (bloc 48)

S'[z]=z' (bloc 24)
```

Fin de boucle (sortie Y du bloc 29')

```
t <- t+m (bloc 31, figure 3)

t <- t+k (bloc 32, figure 3)

t <- S'[t] (bloc 33, figure 3)

t <- t+m' (bloc 34, figure 3)
```

Retourner t (bloc 35, figure 3).

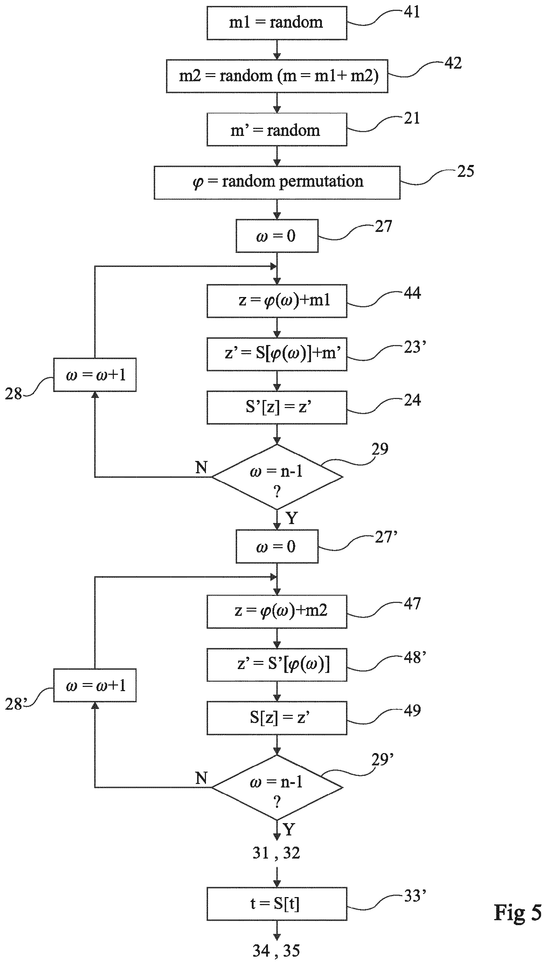

La figure 5 représente, de façon schématique et sous forme de blocs, un autre mode de réalisation selon ce deuxième aspect.

On commence (bloc 41, m1=random), (bloc 42, m2=random, m=m1+m2), par définir deux masques (nombres aléatoires) m1 et m2 tels que leur combinaison par un OU-Exclusif représente un nombre aléatoire m (le nombre qui sera utilisé à l'étape 31). On définit ensuite, comme précédemment, la valeur aléatoire m' de démasquage (bloc 21, m'=random) et une permutation aléatoire (bloc 25, ($\varphi$=random permutation) applicable dans l'ensemble des n rangs $\omega$. Les masques m1, m2, m et m' représentent des octets. L'ordre des étapes 21 et 43 (ou 43 et 21) par rapport aux étapes 41 et 42 n'a pas d'importance.

Puis, on découpe le recalcul de la table de substitution en deux boucles, une première fois avec l'intervention de l'aléa m1 sur la table S, une seconde fois avec l'intervention de l'aléa m2 sur la table S' issue de la première boucle.

Ainsi, successivement pour chaque octet S[$\omega$] de rang $\omega$ de la table de substitution S', on applique la fonction de permutation $\varphi$ au rang $\omega$ et on combine (bloc 44, z=$\varphi$($\omega$)+m1) par un OU-Exclusif le résultat $\varphi$($\omega$) au masque m1 en plaçant le résultat dans une variable temporaire z. On combine ensuite (bloc 23', z '=S[$\varphi$($\omega$)] +m') l'octet S[$\varphi$($\omega$)]au masque m' en plaçant le résultat dans une variable temporaire z'. Puis (bloc 24, S'[z]=z'), on affecte la valeur contenue dans cette variable z' à l'octet S'[z] de rang z de la table de substitution masquée S'.

Par exemple, un compteur $\omega$ est initialisé à 0 (bloc 27, $\omega$=0) et est incrémenté de 1 (bloc 28, $\omega$=$\omega$+1) à chaque traitement d'un octet de la table S tant que tous les octets n'ont pas été traités (sortie N du bloc 29, $\omega$=n-1 ?).

Une fois que les n octets S[$\omega$] de la table de substitution S ont été traités (sortie Y du bloc 29) avec la partie m1 du nombre m, on reprend les octets de la table de substitution S' résultante de la première boucle pour les masquer avec la partie m2.

Ainsi, successivement pour chaque octet S'[$\omega$] de rang $\omega$ de la table de substitution S', on applique la fonction de permutation $\varphi$ au rang $\omega$ et on combine (bloc 47, z=$\varphi$($\omega$)+m2) par un OU-Exclusif le résultat $\varphi$($\omega$) au masque m2 en plaçant le résultat dans la variable z. On place ensuite (bloc 48, z'=S'[$\varphi$($\omega$)], l'octet S'[($\varphi$($\omega$)] de la table de substitution S' résultant de la première boucle, dans la variable z'. Puis (bloc 49, S[z]=z'), on affecte la valeur contenue dans cette variable z' à l'octet S[z] de rang z de la table de substitution S.

Par exemple, pour le calcul en boucle, un compteur $\omega$ est de nouveau initialisé à 0 (bloc 27', $\omega$=0) et est incrémenté de 1 (bloc 28', $\omega$=$\omega$+1) à chaque traitement d'un octet de la table S' issue de la première boucle, tant que tous les octets n'ont pas été traités (sortie N du bloc 29', $\omega$=n-1 ?).

Une fois (sortie Y du bloc 29') que les n octets S[$\varphi$($\omega$)] de la table de substitution S' issue de la première boucle ont été traités avec la partie m2 du nombre m, on utilise la table de substitution résultante S, qui constitue ici la table de substitution masquée pour traiter le message octet par octet (bloc par bloc). Ainsi, l'étape 33 décrite en relation avec les figures 2 et 3 prend les octets de la table S et non ceux de la table S' (bloc 33', t=S[t]). Les étapes 31, 32, 34 et 35 ne sont pas modifiées par rapport à la réalisation des figures 2 et 3.

Par rapport à la réalisation de la figure 4, on économise l'initialisation de la table S' (bloc 43, figure 4).

Le calcul illustré par la figure 4 peut également s'écrire de la façon suivante :

```
m1 <- aléa (bloc 41)

m2 <- aléa (bloc 42)

m' <- aléa (bloc 21)

φ <- permutation aléatoire (bloc 25)
```

Pour $\omega$=0 à n-1 (bloc 27, sortie N du bloc 29, bloc 28) :

```
z <- φ(ω)+m1 (bloc 44)

z' <- S[φ(ω)]+m' (bloc 23')

S'[z]=z' (bloc 24)
```

Fin de boucle (sortie Y du bloc 29)

Pour ω=0 à n-1 (bloc 27', sortie N du bloc 29', bloc 28') :

```
z <- φ(ω)+m2 (bloc 47)
```

```
z' <- S'[φ(ω)] (bloc 48')
```

```
S[z]=z' (bloc 49)
```

Fin de boucle (sortie Y du bloc 29')

```
t <- t+m (bloc 31, figure 3)
```

```
t <- t+k (bloc 32, figure 3)
```

```
t <- S[t] (bloc 33')
```

```
t <- t+m' (bloc 34, figure 3)
```

Retourner t (bloc 35, figure 3).

Le fait de découper le masque m en deux parties m1 et m2 et d'exécuter deux fois le calcul de la table de substitution rend plus difficile l'attaque.

Selon le troisième aspect, on prévoit d'utiliser, lors du recalcul de la table de substitution, une fonction de permutation commutative avec l'opération de substitution.

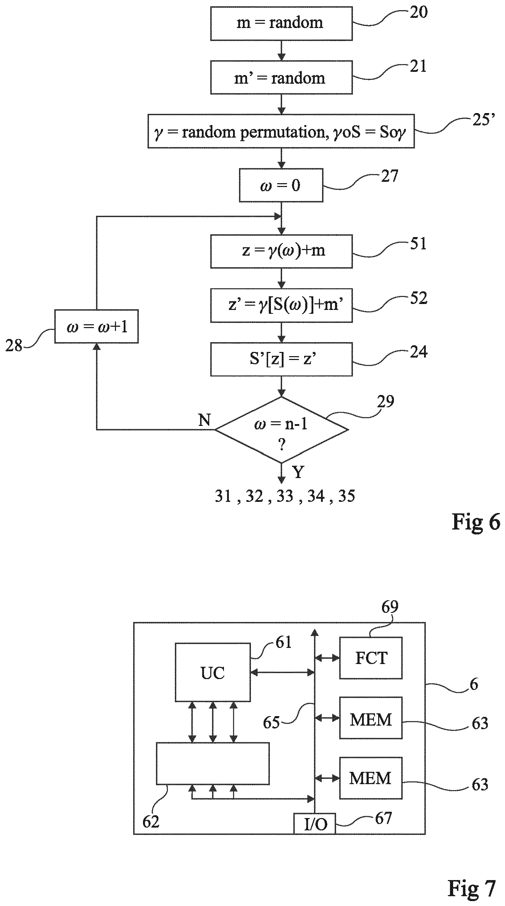

La figure 6 représente, de façon schématique et sous forme de blocs, un mode de réalisation selon ce troisième aspect.

On commence (bloc 20, m=random), (bloc 21, m'=random), comme en figure 2, par définir deux masques (nombres aléatoires) m et m', respectivement de masquage et de démasquage.

Puis, on sélectionne (bloc 25', γ=random permutation, γoS=Soγ) une permutation aléatoire ayant une propriété commutative avec la table de substitution).

Ensuite, successivement pour chaque octet $S[\omega]$ de rang ω de la table de substitution S, on applique la fonction de permutation γ au rang ω et on combine (bloc 51, z=γ(ω)+m) par un OU-Exclusif le résultat γ(ω) au masque m en plaçant le résultat dans une variable temporaire z. On combine ensuite (bloc 52, z'=γ(S[ω])+m') le résultat de l'application de la fonction γ à l'octet S[(ω)] au masque m' en plaçant le résultat dans une variable temporaire z'. Puis (bloc 24, S'[z]=z'), on affecte la valeur contenue dans cette variable z' à l'octet S'[z] de rang z de la table de substitution masquée S'. Comme dans les exemples précédents, un compteur ω est par exemple initialisé à 0 (bloc 27, ω=0) et est incrémenté de 1 (bloc 28, ω=ω+1) à chaque traitement d'un octet S[ω] de la table S, tant que tous les octets n'ont pas été traités (sortie N du bloc 29, ω=n-1 ?).

Une fois que les n octets $S[\omega]$ de la table de substitution S ont été traités (sortie Y du bloc 29), on utilise la table de substitution masquée résultante S' pour traiter le message octet par octet (bloc par bloc) et exécuter les étapes 31 à 35 comme décrit dans les figures 2 et 3.

Par rapport à la figure 3, la valeur γ(ω) n'apparaît qu'une fois par boucle. Il n'est donc pas possible de la combiner au sein de la boucle pour exploiter une trace en courant. Toutefois, comme la fonction γ est commutative avec l'opération S de substitution, le résultat de l'étape 52 est le même que celui de l'étape 23' de la figure 3, ce qui permet le démasquage.

Le calcul illustré par la figure 5 peut également s'écrire de la façon suivante :

```
m <- aléa (bloc 20)
```

$$m' \leftarrow \text{aléa (bloc 21)}$$

$$\gamma \leftarrow \text{permutation aléatoire commutative avec l'opération de substitution S (bloc 25')}$$

Pour $\omega=0$ à n-1 (bloc 27, sortie N du bloc 29, bloc 28) :

$$z \leftarrow \gamma(\omega)+m \text{ (bloc 51)}$$

$$z' \leftarrow \gamma(S[\omega])+m' \text{ (bloc 52)}$$

$$S'[z]=z' \text{ (bloc 24)}$$

Fin de boucle (sortie Y du bloc 29)

$$t \leftarrow t+m \text{ (bloc 31)}$$

$$t \leftarrow t+k \text{ (bloc 32)}$$

$$t \leftarrow S'[t] \text{ (bloc 33)}$$

$$t \leftarrow t+m' \text{ (bloc 34)}$$

Retourner t (bloc 35).

A titre d'exemple particulier de réalisation, on pourra utiliser, comme fonction $\gamma$ commutative avec l'opération de substitution, l'élévation à une puissance quelconque, de préférence aléatoire, de la table de substitution.

La mise en oeuvre du procédé de vérification de la sensibilité à l'attaque selon le premier aspect permet en outre de vérifier si la contremesure décrite en relation avec la figure 4 ou en relation avec la figure 5 est implémentée ou non par le circuit électronique.

En pratique, les différentes valeurs, octets, variables, etc. sont matériellement stockées dans des registres d'un ou plusieurs circuits électroniques et le contenu de ces registres peut être lu et/ou écrit en fonction de signaux de commande dépendant des étapes du procédé. Le circuit électronique est, par exemple, un processeur d'exécution de l'algorithme décrit ayant des registres d'entrée, de sortie, et de manipulation des différentes valeurs. Les étapes de calcul et de substitution sont, par exemple, effectuées par des éléments en logique câblée intégrés au processeur.

La figure 7 représente, de façon très schématique, un exemple de circuit électronique 6 du type auquel s'appliquent les modes de réalisation qui vont être décrits.

Le circuit 6 comporte :

une entité de calcul 61 (UC), par exemple une machine d'états, un microprocesseur, un circuit logique programmable, etc., incluant ou utilisant des registres 62, contenant différentes variables servant au calcul, et représentés arbitrairement en figure 7 à l'extérieur de l'entité 61 ;
une ou plusieurs zones 63 (MEM) de stockage volatile et/ou non volatile pour stocker tout ou partie des données et clés ;
un ou plusieurs bus 65 de données, d'adresses et/ou de commandes entre les différents éléments internes au circuit 6 et une interface d'entrée-sortie 67 (I/O) de communication avec l'extérieur du circuit 6.

Le circuit 6 peut inclure divers autres circuits en fonction de l'application, symbolisés en figure 7 par un bloc 69 (FCT).

Divers modes de réalisation ont été décrits. Diverses variantes et modifications apparaîtront à l'homme de l'art. En particulier, l'intégration des étapes décrites ci-dessus dans les traitements par tour de l'algorithme AES est à la portée de l'homme du métier à partir de la description ci-dessus. Enfin, la mise en oeuvre pratique des modes de réalisation qui ont été décrits est à la portée de l'homme du métier à partir des indications fonctionnelles données ci-dessus.

## Revendications

1. Procédé de protection, d'un algorithme Rijndael exécuté par un circuit électronique (6), contre des attaques par canaux cachés, dans lequel :

   chaque bloc (t) de données à chiffrer ou à déchiffrer est masqué (31) par un premier masque (m) avant application (33) d'une opération non linéaire de substitution par bloc à partir d'une table de substitution (S'), puis est démasqué (34) par un deuxième masque (m') après substitution ; et
   la table de substitution est recalculée (51, 52, 24), bloc par bloc, avant application de l'opération non linéaire, l'ordre de traitement des blocs de la table de substitution étant soumis à une permutation aléatoire (γ), commutative avec l'opération non linéaire de substitution.

2. Procédé selon la revendication 1, dans lequel :

   successivement, pour chaque bloc de la table de substitution :

   dans une première étape (51), le rang (ω) du bloc est soumis à ladite permutation (γ) et est combiné au premier masque (m) ;
   dans une deuxième étape (52), le bloc (S[ω]) est soumis à la permutation (γ) et le résultat est combiné au deuxième masque (m) ; et
   le bloc, identifié par le résultat de la première étape, est substitué par le résultat de la deuxième étape.

3. Procédé selon la revendication 1 ou 2, comportant les étapes suivante :

   successivement pour chaque bloc de la table de substitution (S) :

   dans une première étape (51), appliquer la permutation (γ) au rang (ω) du bloc courant, combiner le résultat au premier masque (m) et stocker le résultat dans une première variable (z) ;
   dans une deuxième étape (52), appliquer la permutation (γ) au bloc courant (S[ω]), combiner le résultat au deuxième masque (m') et stocker le résultat dans une deuxième variable (z') ; et
   remplacer (24) le bloc de la table de substitution ayant pour rang le résultat de la première étape par le résultat de la deuxième étape.

4. Procédé selon l'une quelconque des revendications 1 à 3, dans lequel les masques (m, m') sont des nombres aléatoires.

5. Procédé selon l'une quelconque des revendications 1 à 4, dans lequel les masques (m, m') ont tous la même taille qu'un bloc.

6. Procédé selon l'une quelconque des revendications 1 à 5, dans lequel les combinaisons sont de type OU-Exclusif.

7. Procédé selon l'une quelconque des revendications 1 à 6, appliqué à l'AES.

8. Circuit électronique (6) adapté à la mise en oeuvre du procédé selon l'une quelconque des revendications 1 à 7.

## Patentansprüche

1. Von einer elektronischen Schaltung (6) ausgeführtes Verfahren eines Rijndael-Algorithmus zum Schutz vor Angriffen durch versteckte Kanäle, wobei:

   jeder zu verschlüsselnde oder entschlüsselnde Block (t) von Daten durch eine erste Maske (m) vor Anwendung (33) eines nicht linearen Substitutionsvorgangs pro Block mit einer Substitutionstabelle (S') maskiert (31) und anschließend durch eine zweite Maske (m') nach der Substitution demaskiert (34) wird; und

die Substitutionstabelle Block für Block vor Anwendung des nicht linearen Vorgangs neuberechnet (51, 52, 24) wird, wobei die Reihenfolge der Verarbeitung der Blöcke der Substitutionstabelle einer zufälligen Permutation (γ), kommutativ mit dem nicht linearen Substitutionsvorgang, unterzogen wird.

2. Verfahren nach Anspruch 1, wobei: nacheinander für jeden Block der Substitutionstabelle:

in einem ersten Schritt (51) der Rang (ω) des Blocks der Permutation (γ) unterzogen und mit der ersten Maske (m) kombiniert wird;

in einem zweiten Schritt (52) der Block (S[ω]) der Permutation (γ) unterzogen wird und das Ergebnis mit der zweiten Maske (m) kombiniert wird; und

der durch das Ergebnis des ersten Schritts identifizierte Block durch das Ergebnis des zweiten Schritts ersetzt wird.

3. Verfahren nach Anspruch 1 oder 2, umfassend die folgenden Schritte:

nacheinander für jeden Block der Substitutionstabelle (S):

in einem ersten Schritt (51) das Anwenden der Permutation (γ) auf den Rang (ω) des laufenden Blocks, das Kombinieren des Ergebnisses mit der ersten Maske (m) und das Speichern des Ergebnisses in einer ersten Variable (z);

in einem zweiten Schritt (52) das Anwenden der Permutation (γ) auf den laufenden Block (S[ω]), das Kombinieren des Ergebnisses mit der zweiten Maske (m') und das Speichern des Ergebnisses in einer zweiten Variable (z'); und

das Ersetzen (24) des Blocks der Substitutionstabelle mit dem Ergebnis des ersten Schritts als Rang durch das Ergebnis des zweiten Schritts.

4. Verfahren nach einem der Ansprüche 1 bis 3, wobei die Masken (m, m') Zufallszahlen sind.

5. Verfahren nach einem der Ansprüche 1 bis 4, wobei die Masken (m, m') alle die gleiche Größe wie ein Block aufweisen.

6. Verfahren nach einem der Ansprüche 1 bis 5, wobei die Kombinationen einem exklusiven ODER entsprechen.

7. Auf den AES angewendetes Verfahren nach einem der Ansprüche 1 bis 6.

8. Zum Ausführen des Verfahrens nach einem der Ansprüche 1 bis 7 ausgebildete elektronische Schaltung (6).

**Claims**

1. Method of protection, of a Rijndael algorithm executed by an electronic circuit (6), against hidden channel attacks, in which:

each block (t) of data to be enciphered or deciphered is masked (31) by a first mask (m) before application (33) of a nonlinear block substitution operation based on a substitution table (S'), and is then unmasked (34) by a second mask (m') after substitution; and

the substitution table is recalculated (51, 52, 24), block by block, before application of the nonlinear operation, the order of processing of the blocks of the substitution table being subjected to a random permutation (γ), commutative with the nonlinear substitution operation.

2. Method according to Claim 1, in which:

successively, for each block of the substitution table:

in a first step (51), the rank (ω) of the block is subjected to the said permutation (γ) and is combined with the first mask (m);

in a second step (52), the block (S[ω]) is subjected to the permutation (γ) and the result is combined with the second mask (m); and
the block, identified by the result of the first step, is substituted with the result of the second step.

3. Method according to Claim 1 or 2, comprising the following steps:

successively for each block of the substitution table (S) :

in a first step (51), applying the permutation (γ) to the rank (ω) of the current block, combining the result with the first mask (m) and storing the result in a first variable (z);
in a second step (52), applying the permutation (γ) to the current block (S[ω]), combining the result with the second mask (m') and storing the result in a second variable (z'); and
replacing (24) the block of the substitution table whose rank is the result of the first step with the result of the second step.

4. Method according to any one of Claims 1 to 3, in which the masks (m, m') are random numbers.

5. Method according to any one of Claims 1 to 4, in which the masks (m, m') all have the same size as a block.

6. Method according to any one of Claims 1 to 5, in which the combinations are of Exclusive OR type.

7. Method according to any one of Claims 1 to 6, applied to the AES.

8. Electronic circuit (6) suitable for the implementation of the method according to any one of Claims 1 to 7.

Fig 1

Fig 2

Fig 3

Fig 4

Fig 5

m = random — 20

m' = random — 21

$\gamma$ = random permutation, $\gamma$oS = So$\gamma$ — 25'

$\omega$ = 0 — 27

z = $\gamma(\omega)$+m — 51

z' = $\gamma$[S($\omega$)]+m' — 52

$\omega$ = $\omega$+1 — 28

S'[z] = z' — 24

N — $\omega$ = n-1 ? — 29

Y

31 , 32 , 33 , 34 , 35

**Fig 6**

69

61 — UC

FCT

6

65

MEM — 63

62

MEM — 63

I/O — 67

**Fig 7**

# EP 3 139 364 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- Differential Power Analysis. **DE PAUL KOCHER ; JOSHUA JAFFE ; BENJAMIN JUN.** CRYPTO. Springer-Verlag LNCS, 1999, vol. 99, 388-397

- **DE JOAN DAEMEN ; VINCENT RIJMEN.** The Design of Rijndael. Springer-Verlag